# FASCICULE DE BREVET EUROPEEN

(11) **EP 4 375 192 B1**
(45) Date de publication et mention de la délivrance du brevet: **28.01.2026**
(21) Numéro de dépôt: 23209969.7
(22) Date de dépôt: 15.11.2023
(51) Int. Cl.: B64D 13/00, B64D 33/02, F02C 6/08

(54) **AÉRONEF COMPRENANT AU MOINS UN DISPOSITIF D'ADMISSION D'AIR CONFIGURÉ POUR LIMITER L'APPARITION DE BRUITS AÉRODYNAMIQUES**
FLUGZEUG MIT MINDESTENS EINER ZUR BEGRENZUNG DES AUFTRETENS VON AERODYNAMISCHEM GERÄUSCH KONFIGURIERTEN LUFTEINLASSVORRICHTUNG
AIRCRAFT COMPRISING AT LEAST ONE AIR INTAKE DEVICE CONFIGURED TO LIMIT THE OCCURRENCE OF AERODYNAMIC NOISE

(30) Priorité: 22.11.2022 FR 2212127
(43) Date de publication de la demande: 29.05.2024
(73) Titulaire: AIRBUS OPERATIONS (S.A.S.), 31060 Toulouse (FR)
(72) Inventeur: GALDEANO, Stéphane, 31060 TOULOUSE (FR); JUANAS FERNANDEZ, Maria Del Sagrario, 31060 TOULOUSE (FR); ROMEO, Jean-Paul, 31060 TOULOUSE (FR); FARGIER, Thierry, 31060 TOULOUSE (FR); NODE LANGLOIS, Thomas, 31060 TOULOUSE (FR)
(74) Mandataire: Airbus-OPS SAS

(56) Documents cités:
- EP-A1- 3 388 648
- EP-A2- 2 031 213
- US-A- 6 050 527
- US-A1- 2010 126 182
- US-A1- 2020 182 081

## Description

La présente demande se rapporte à un aéronef comprenant au moins un dispositif d'admission d'air configuré pour limiter l'apparition de bruits aérodynamiques.

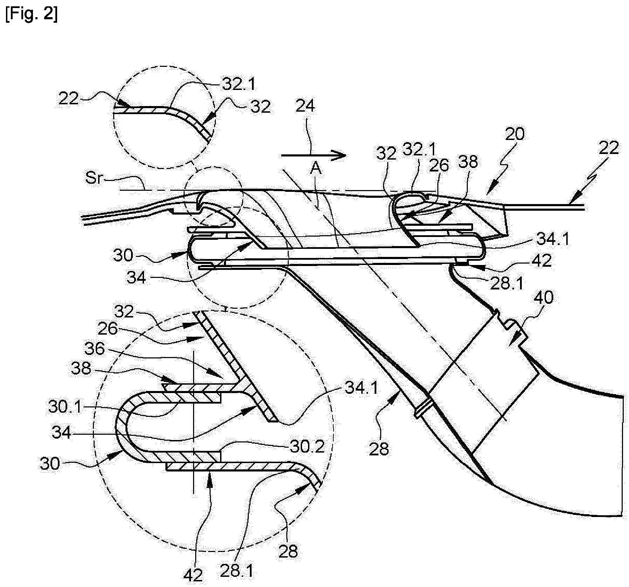

Selon un mode de réalisation, un aéronef 10 comprend un fuselage 12, des ailes 14 prévues de part et d'autre du fuselage 12 ainsi que des ensembles de propulsion 16 reliés aux ailes par des mâts 18. L'aéronef 10 comprend également au moins un équipement de conditionnement de l'air ainsi qu'au moins un dispositif d'admission d'air 20, visible sur la figure 2, configuré pour acheminer l'air en direction de l'équipement de conditionnement de l'air. Ce dispositif d'admission d'air débouche au niveau d'une paroi aérodynamique 22 en contact avec un flux d'air 24 lorsque l'aéronef 10 est en vol, cette paroi aérodynamique étant prévue au niveau du fuselage 12, d'une aile 14, d'un ensemble de propulsion 16 ou d'un mât 18.

Selon une configuration, le dispositif d'admission d'air 20 comprend une entrée d'air 26 solidaire de la paroi aérodynamique 22, un conduit d'admission 28 solidaire d'un moteur d'un ensemble de propulsion 16 ainsi qu'un joint annulaire 30 reliant l'entrée d'air 26 et le conduit d'admission 28.

L'entrée d'air 26 comprend un tronçon amont évasé 32 qui présente une extrémité débouchante 32.1 reliée à la paroi aérodynamique 22, un tronçon aval 34, sensiblement tubulaire, présentant une extrémité 34.1 orientée vers le conduit d'admission 28, une zone de jonction 36 au niveau de laquelle les tronçons aval évasé et amont 32, 34 sont reliés ainsi qu'une première collerette 38 prévue à l'extérieur du tronçon aval 34 et positionnée approximativement au niveau de la zone de jonction 36.

Selon un mode de réalisation, l'entrée d'air 26 est de type affleurant. Ainsi, l'extrémité débouchante 32.1 du tronçon amont évasé 32 est positionnée dans une surface de référence Sr sensiblement parallèle au flux d'air 24.

Le conduit d'admission 28 comprend une vanne 40 configurée pour occuper un état ouvert dans lequel elle dégage le conduit d'admission 28 et un état fermé dans lequel elle obture le conduit d'admission 28. Ce dernier comprend une extrémité 28.1 orientée vers l'entrée d'air 26 ainsi qu'une deuxième collerette 42 au niveau de l'extrémité 28.1.

Le tronçon aval 34 de l'entrée d'air 26 et le conduit d'admission 28 sont sensiblement alignés et présentent le même axe A et le même diamètre intérieur.

Selon une configuration, l'axe A du tronçon aval 34 de l'entrée d'air 26 et du conduit d'admission 28 n'est pas perpendiculaire à la surface de référence Sr. Cet axe A est incliné selon le sens d'écoulement du flux d'air 24 et forme un angle d'environ 60° avec la surface de référence Sr.

Les première et deuxième collerettes 38, 42 sont écartées l'une de l'autre. Elles sont sensiblement parallèles entre elles.

Le joint annulaire 30 présente une section en forme de C, une première branche 30.1 de la forme en C étant reliée à la première collerette 38, une deuxième branche 30.2 de la forme en C étant reliée à la deuxième collerette 42.

Le dispositif d'admission d'air 20 est optimisé pour réduire la traînée de l'aéronef lorsque la vanne 40 est à l'état ouvert.

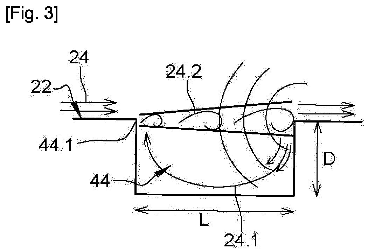

Lorsque la vanne 40 est à l'état fermé, l'entrée d'air 26 et la partie du conduit d'admission 28 située en amont de la vanne 40 forment une cavité fermée 44, représentée de manière schématique sur la figure 3. Le flux d'air 24 qui s'écoule au-dessus de la cavité fermée 44 génère un bruit aérodynamique, notamment un sifflement, en raison du couplage entre un flux d'air de retour 24.1 formé dans la cavité fermée 44 et un flux perturbé 24.2 apparaissant après le bord amont 44.1 de la cavité fermée 44.

Les documents US2020/182081A1, EP2031213A2, US2010/126182A1, EP3388648A1, US6050527A présentent des exemples de l'art antérieur.
présente invention vise à remédier à tout ou partie des inconvénients de l'art antérieur.

A cet effet, l'invention a pour objet un aéronef comprenant au moins une paroi aérodynamique le long de laquelle s'écoule un flux d'air selon une direction d'écoulement en fonctionnement ainsi qu'au moins un dispositif d'admission d'air comportant une entrée d'air débouchant au niveau de la paroi aérodynamique, un conduit d'admission séparé de l'entrée d'air ainsi qu'un joint annulaire reliant l'entrée d'air et le conduit d'admission en les entourant, l'entrée d'air s'étendant entre une première extrémité positionnée sur une surface de référence sensiblement parallèle au flux d'air et une deuxième extrémité orientée vers le conduit d'admission, ce dernier comprenant une première extrémité orientée vers l'entrée d'air et espacée de la deuxième extrémité de l'entrée d'air.

Selon l'invention, le dispositif d'admission d'air comprend au moins une excroissance en saillie par rapport à la surface de référence et positionnée en amont de l'entrée d'air selon la direction d'écoulement du flux d'air, à proximité de ou au même niveau que la première extrémité de l'entrée d'air.

L'excroissance 70 permet de réduire les bruits aérodynamiques.

Selon une autre caractéristique optionnelle, l'excroissance et l'entrée d'air présentent un profil continu, sans points d'inflexion.

Selon une autre caractéristique optionnelle, l'entrée d'air est sensiblement symétrique par rapport à un plan longitudinal médian, l'excroissance étant positionnée de manière symétrique par rapport au plan longitudinal médian.

Selon une autre caractéristique optionnelle, l'excroissance présente un sommet ainsi qu'une hauteur au niveau du sommet supérieure ou égale à 10 mm.

Selon une autre caractéristique optionnelle, l'excroissance est linéaire et s'étend selon une trajectoire symétrique par rapport au plan longitudinal médian.

Selon une autre caractéristique optionnelle, le dispositif d'admission d'air comprend une jupe solidaire du conduit d'admission, prolongeant ce dernier en direction de l'entrée d'air et entourant cette dernière, l'entrée d'air et la jupe étant configurées pour former une chicane.

Selon une autre caractéristique optionnelle, l'entrée d'air comprend un tronçon aval sensiblement tubulaire, présentant une extrémité libre orientée vers le conduit d'admission, ainsi qu'une première collerette prévue à l'extérieur du tronçon aval et reliée de manière étanche au joint annulaire. En complément, la jupe comprend une première partie reliée au conduit d'admission ainsi qu'une deuxième partie tubulaire, solidaire de la première partie, positionnée autour du tronçon aval de l'entrée d'air, la deuxième partie présentant une extrémité libre plus écartée du conduit d'admission que l'extrémité libre du tronçon aval de l'entrée d'air.

Selon une autre caractéristique optionnelle, la première partie comprend une face intérieure dans le prolongement du conduit d'admission.

Selon l'invention, l'entrée d'air comprend un bord amont, un bord aval décalé vers l'aval selon la direction d'écoulement du flux d'air par rapport au bord amont ainsi qu'un bord d'attaque positionné en dessous du bord aval. En complément, le dispositif d'admission d'air comprend un déflecteur présentant :
- un bord avant, sensiblement perpendiculaire à la direction d'écoulement du flux d'air en fonctionnement, décalé vers l'amont par rapport au bord d'attaque de l'entrée d'air et plus écarté, vers le bas, la surface de référence que ledit bord d'attaque de l'entrée d'air
- une face supérieure qui s'étend du bord avant jusqu'à un bord arrière situé au niveau de l'entrée d'air, entre le bord d'attaque de l'entrée d'air et la surface de référence.

Selon une autre caractéristique optionnelle, le dispositif d'admission d'air présente une vanne configurée pour occuper des états ouvert et fermé ainsi qu'une profondeur donnée lorsque la vanne est à l'état fermé. En complément, le bord avant du déflecteur est séparé de la surface de référence d'une distance comprise entre 15 et 25% de la profondeur du dispositif d'admission d'air.

Selon une autre caractéristique optionnelle, l'entrée d'air présente une longueur donnée dans un plan de mesure sensiblement parallèle à la surface de référence et contenant le bord avant du déflecteur. En complément, dans le plan de mesure, le bord avant du déflecteur est séparé de l'entrée d'air d'une distance comprise entre 15 et 25% de la longueur donnée de l'entrée d'air. D'autres caractéristiques et avantages ressortiront de la description de l'invention qui va suivre, description donnée à titre d'exemple uniquement, en regard des dessins annexés parmi lesquels :

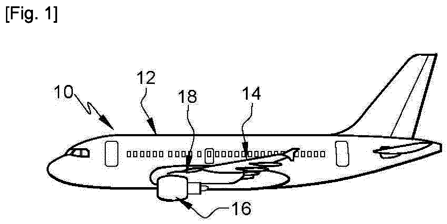

- La figure 1 est une vue latérale d'un aéronef,
- La figure 2 est une coupe longitudinale d'un dispositif d'admission d'air illustrant un mode de réalisation de l'art antérieur,
- La figure 3 est une représentation schématique du dispositif d'admission d'air visible sur la figure 2, formant une cavité fermée ainsi que des flux d'air circulant au-dessus et dans ladite cavité fermée,
- La figure 4 est une coupe longitudinale d'un dispositif d'admission d'air illustrant un mode de réalisation de l'invention,
- La figure 5 est une coupe longitudinale d'une partie du dispositif d'admission d'air visible sur la figure 4,
- La figure 6 est une vue latérale d'un dispositif d'admission d'air illustrant un mode de réalisation de l'invention,
- La figure 7 est une vue de face du dispositif d'admission d'air visible sur la figure 6,
- La figure 8 est une coupe longitudinale du dispositif d'admission d'air visible sur la figure 6,
- La figure 9 est une coupe longitudinale d'un dispositif d'admission d'air illustrant un mode de réalisation de l'invention, et
- La figure 10 est une vue de dessus du dispositif d'admission d'air visible sur la figure 9.

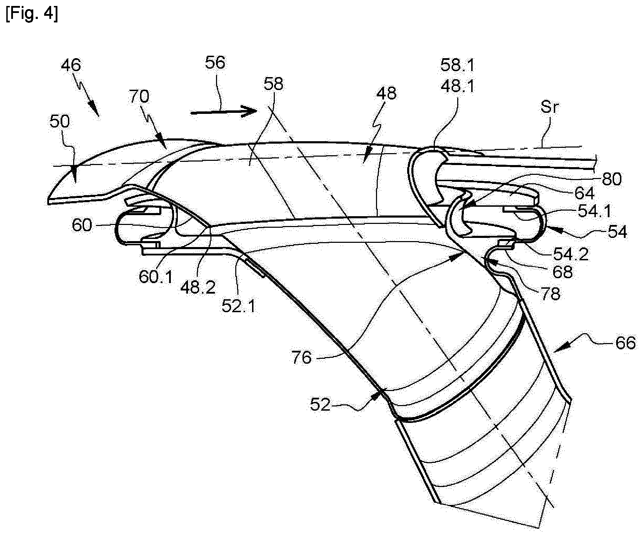

Selon un mode de réalisation visible sur la figure 4, un aéronef comprend au moins une paroi aérodynamique 50 ainsi qu'au moins un dispositif d'admission d'air 46.

Selon une configuration, le dispositif d'admission d'air 46 comporte une entrée d'air 48 configurée pour être reliée à la paroi aérodynamique 50, un conduit d'admission 52 séparé de l'entrée d'air 48 et configuré pour être relié à un moteur d'un ensemble de propulsion de l'aéronef ainsi qu'un joint annulaire 54, reliant l'entrée d'air 48 et le conduit d'admission 52, positionné autour de l'entrée d'air 48 et du conduit d'admission 52. Lorsque l'aéronef est en vol, un flux d'air 56 s'écoule selon une direction d'écoulement, matérialisée par une flèche sur la figure 4, sensiblement parallèle à la paroi aérodynamique 50.

L'entrée d'air 48 comprend un tronçon amont évasé 58 qui présente une extrémité débouchante 58.1 reliée à la paroi aérodynamique 50, un tronçon aval 60, sensiblement tubulaire, présentant une extrémité libre 60.1 orientée vers le conduit d'admission 52, une zone de jonction 62 au niveau de laquelle les tronçons aval évasé et amont 58, 60 sont reliés ainsi qu'une première collerette 64 prévue à l'extérieur du tronçon aval 60 et positionnée approximativement au niveau de la zone de jonction 62.

Selon un mode de réalisation, l'entrée d'air 48 est de type affleurant. Ainsi, l'extrémité débouchante 58.1 du tronçon amont évasé 58 est positionnée dans une surface de référence Sr sensiblement parallèle à la direction d'écoulement du flux d'air 56.

Le conduit d'admission 52 comprend une vanne 66 configurée pour occuper un état ouvert dans lequel elle dégage le conduit d'admission 52 et un état fermé dans lequel elle obture le conduit d'admission 52. Ce dernier comprend une extrémité 52.1 orientée vers l'entrée d'air 48 ainsi qu'une deuxième collerette 68 au niveau de l'extrémité 52.1.

Le tronçon aval 60 de l'entrée d'air 48 et le conduit d'admission 52 sont tubulaires, sensiblement alignés et présentent un même axe A.

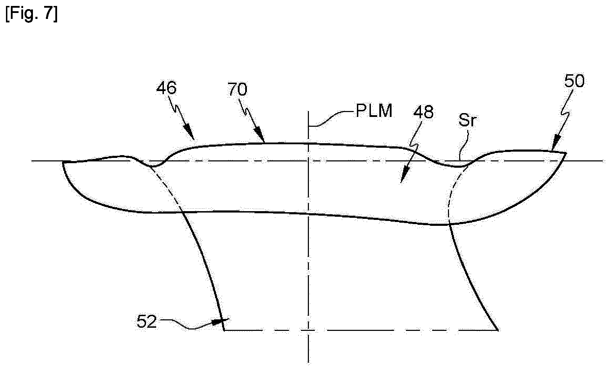

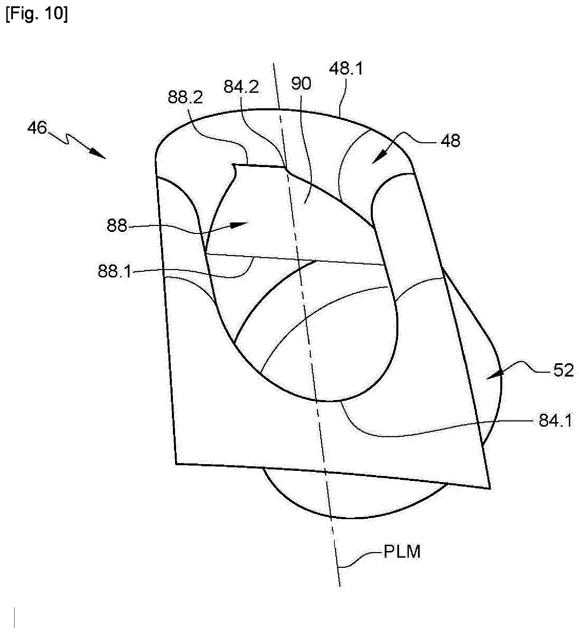

Pour la suite de la description, un plan longitudinal médian PLM (visible sur les figures 7 et 10) correspond au plan contenant l'axe A et la direction d'écoulement du flux d'air 56. Un plan transversal est un plan perpendiculaire à la direction d'écoulement du flux d'air 56. Les termes amont et aval font référence au sens d'écoulement du flux d'air 56, qui s'écoule de l'amont vers l'aval.

Selon un agencement, l'entrée d'air 48, le conduit d'admission 52 et le joint annulaire 54 sont sensiblement symétriques par rapport au plan longitudinal médian PLM.

Selon une configuration, le dispositif d'admission d'air 46 est incliné. Ainsi, l'axe A et la direction d'écoulement du flux d'air 56 forme dans le plan longitudinal médian PLM un angle inférieur à 80°, compris entre 50 et 70°.

Les première et deuxième collerettes 64, 68 sont écartées l'une de l'autre. Elles sont sensiblement parallèles entre elles.

Le joint annulaire 54 présente une section en forme de C et comprend une première branche 54.1 reliée à la première collerette 64 par une liaison étanche ainsi qu'une deuxième branche 54.2 reliée à la deuxième collerette 68 par une liaison étanche.

Quel que soit son mode de réalisation, le joint annulaire 54 est configuré pour assurer une étanchéité entre l'entrée d'air 48 et le conduit d'admission 52 malgré d'éventuels mouvements relatifs entre l'entrée d'air 48 et le conduit d'admission 52.

L'entrée d'air 48, le conduit d'admission 52 et le joint annulaire 54 ne sont pas plus décrits car ils peuvent être identiques à ceux de l'art antérieur. Quel que soit le mode de réalisation, l'entrée d'air 48 s'étend entre une première extrémité 48.1 débouchant au niveau de la paroi aérodynamique 50 et positionnée sur la surface de référence Sr ainsi qu'une deuxième extrémité 48.2 orientée vers le conduit d'admission 52. Ce dernier comprend une première extrémité 52.1 orientée vers l'entrée d'air 48 et espacée de la deuxième extrémité 48.2 de l'entrée d'air 48. Enfin, le joint annulaire 54 relie l'entrée d'air 48 et le conduit d'admission 52 en les entourant.

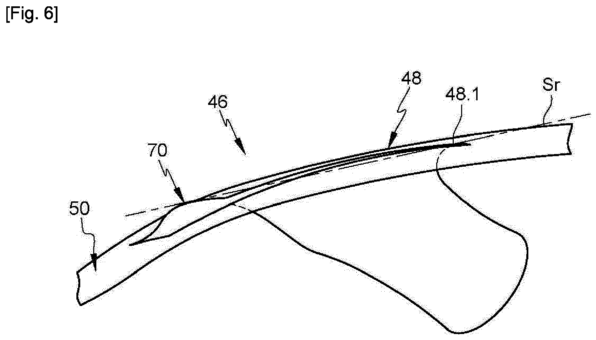

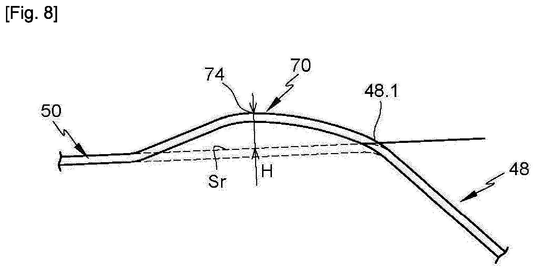

Selon une caractéristique visible sur les figures 6 à 8, le dispositif d'admission d'air 46 comprend au moins une excroissance 70, en saillie par rapport à la surface de référence Sr (visible sur la figure 8) de la paroi aérodynamique 50 en l'absence d'excroissance 70, positionnée en amont de l'entrée d'air 48, à proximité de ou au même niveau que la première extrémité 48.1 de l'entrée d'air 48. Cette dernière et l'entrée d'air 48 présentent un profil continu, sans points d'inflexion.

Selon une configuration, l'excroissance 70 est positionnée de manière symétrique par rapport au plan longitudinal médian PLM.

Dans le plan longitudinal médian PLM, l'excroissance 70 présente un profil qui, de l'amont vers l'aval, est confondu avec la surface de référence Sr, s'écarte progressivement de la surface de référence Sr jusqu'à un sommet 74 puis se rapproche progressivement de la surface de référence Sr jusqu'à être confondu avec la surface de référence Sr. Selon une configuration, le profil de l'excroissance 70 est sensiblement symétrique par rapport à un plan transversal passant par le sommet 74.

Selon une configuration, l'excroissance 70 présente au niveau du sommet 74 une hauteur H (distance séparant le sommet 74 et la surface de référence Sr) supérieure ou égale à 10 mm. De préférence, la hauteur de l'excroissance 70 est supérieure ou égale à 24 mm.

Selon une configuration, l'excroissance 70 est ponctuelle et présente un profil sensiblement identique dans le pan longitudinal médian PLM que dans un plan transversal passant par le sommet 74. Selon un mode de réalisation, le dispositif d'admission d'air 46 comprend une unique excroissance 70 ponctuelle positionnée au niveau du plan longitudinal médian PLM. Selon un autre mode de réalisation, le dispositif d'admission d'air 46 comprend plusieurs excroissances 70 ponctuelles réparties le long d'une ligne rectiligne et perpendiculaires au plan longitudinal médian PLM ou d'une ligne courbe suivant la première extrémité 48.1 de l'entrée d'air 48.

Selon une autre configuration, l'excroissance 70 est linéaire et s'étend selon une trajectoire symétrique par rapport au plan longitudinal médian PLM. Selon un mode de réalisation, cette trajectoire est rectiligne et s'étend dans un plan transversal, comme illustré sur la figure 7. Selon un autre mode de réalisation, la trajectoire est courbe, notamment en arc de cercle, et suit la première extrémité 48.1 de l'entrée d'air 48. Selon une configuration, l'excroissance 70 linéaire présente un profil constant sur toute la longueur de la trajectoire. Selon une autre configuration, la trajectoire de l'excroissance 70 présente deux extrémités distantes du plan longitudinal médian PLM. Selon cette configuration, l'excroissance 70 présente un profil variant de manière continue et progressive du plan longitudinal médian vers chacune des deux extrémités de la trajectoire de l'excroissance 70, cette dernière ayant une hauteur maximale au niveau du plan longitudinal médian PLM et une hauteur nulle au niveau des deux extrémités de la trajectoire de l'excroissance 70.

Comme pour l'art antérieur, lorsque la vanne 66 est à l'état fermé, le dispositif d'admission d'air 46 forme une cavité fermée. Contrairement à l'art antérieur, l'excroissance 70 limite l'apparition d'un phénomène de couplage entre un flux d'air de retour formé dans la cavité fermée et un flux perturbé 24.2 apparaissant au-dessus de l'entrée d'air 48, ce qui permet de réduire les bruits aérodynamiques susceptibles d'être générés par le dispositif d'admission d'air 46.

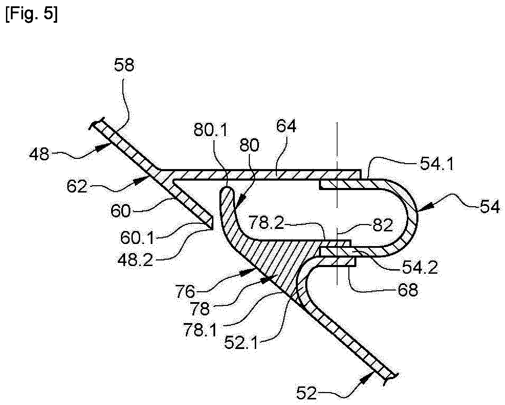

Selon une autre caractéristique visible sur les figures 4 et 5, le dispositif d'admission d'air 46 comprend une jupe 76 solidaire du conduit d'admission 52, prolongeant ce dernier en direction de l'entrée d'air 48 et entourant l'entrée d'air 48.

Selon un mode de réalisation, la jupe 76 comprend une première partie 78 reliée au conduit d'admission 52 ainsi qu'une deuxième partie 80 tubulaire, solidaire de la première partie 78, positionnée autour du tronçon aval 60 de l'entrée d'air 48 et écartée de ce dernier, la deuxième partie 80 présentant une extrémité libre 80.1 plus écartée du conduit d'admission 52 que l'extrémité libre 60.1 du tronçon aval 60 de l'entrée d'air 48. Ainsi, l'entrée d'air 48 et la jupe 76 sont configurées pour former une chicane qui empêche un flux d'air de pénétrer en direction du joint annulaire 54, dans la zone délimitée par les première et deuxième collerettes 64, 68 et le joint annulaire 54.

Cette solution permet également de limiter l'apparition de bruits aérodynamiques.

La jupe 76 est dimensionnée de manière à ce que l'extrémité libre 80.1 soit la plus proche possible de la première collerette 64 de l'entrée d'air 48.

Selon un mode de réalisation, la première partie 78 comprend une face intérieure 78.1 dans le prolongement du conduit d'admission 52 ainsi qu'une troisième collerette 78.2 plaquée contre la deuxième collerette 68 du conduit d'admission 52 et configurée pour loger la deuxième branche 54.2 du joint annulaire. Selon ce mode de réalisation, la deuxième branche 54.2 du joint annulaire 54 est intercalée entre les deuxième et troisième collerettes 68, 78.2. Des éléments de liaison 82, répartis sur toute la périphérie du conduit d'admission 52, relient le conduit d'admission 52, le joint annulaire 54 et la jupe 76.

Selon un agencement, la première partie 78 est configurée pour épouser les formes du conduit d'admission 52 et celles de la deuxième branche 54.2 du joint annulaire 54.

La jupe 76 peut être métallique, en matière plastique ou en matériau composite. Elle peut être moulée ou imprimée. Bien entendu, l'invention n'est pas limitée à ces procédés de fabrication pour la jupe 76.

En fonctionnement, comme illustré sur la figure 10, l'entrée d'air 48 comprend un bord amont 84.1 ainsi qu'un bord aval 84.2 opposé au bord amont 84.1 et décalé vers l'aval selon la direction d'écoulement du flux d'air 56 par rapport au bord amont 84.1. Lorsque la vanne 66 est à l'état fermé, le dispositif d'admission d'air 46 forme une cavité fermée et présente une profondeur correspondant à la distance séparant la surface de référence Sr et la vanne 66 mesurée au niveau de l'axe A. Le dispositif d'admission d'air 46 étant incliné, l'entrée d'air 48 présente, en dessous du bord aval 84.2, un bord d'attaque 86 scindant le flux d'air 56 en un flux d'air entrant et un flux d'air sortant.

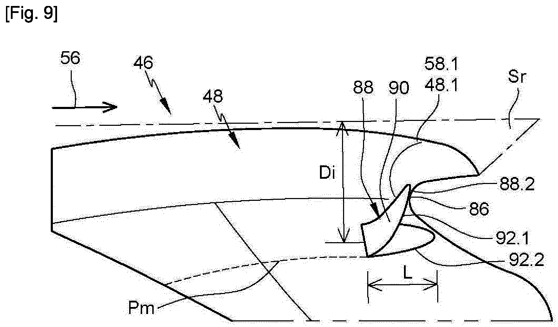

Selon une autre caractéristique visible sur les figures 9 et 10, le dispositif d'admission d'air 46 comprend un déflecteur 88 qui recouvre le bord d'attaque 86 de l'entrée d'air 48. Ce déflecteur 88 présente un bord avant 88.1 positionné dans un plan transversal décalé vers l'amont par rapport au bord d'attaque 86 de l'entrée d'air 48 et plus écarté de la surface de référence Sr que ledit bord d'attaque 86 de l'entrée d'air 48. Ce déflecteur 88 comprend une face supérieure 90 qui s'étend du bord avant 88.1 jusqu'à un bord arrière 88.2 positionné au niveau de l'entrée d'air 48, entre le bord d'attaque 86 de l'entrée d'air 48 et la surface de référence Sr.

Le bord avant 88.1 du déflecteur 88 est séparé de la surface de référence Sr d'une distance Di comprise entre 15 et 25% de la profondeur du dispositif d'admission d'air 46. Dans un plan de mesure Pm sensiblement parallèle à la surface de référence Sr et contenant le bord avant 88.1 du déflecteur 88, l'entrée d'air 48 présente une longueur donnée (dimension prise au niveau du plan longitudinal médian PLM). Dans ce plan de mesure Pm, le bord avant 88.1 du déflecteur 88 est séparé de l'entrée d'air 48 d'une distance L comprise entre 15 et 25% de la longueur donnée de l'entrée d'air 48.

La face supérieure 90 du déflecteur 88 peut être plate ou présenter une forme concave. Selon une configuration, le déflecteur 88 comprend une unique paroi, ayant une épaisseur constante, qui comporte la face supérieure 90 et s'étend du bord avant 88.1 jusqu'à l'entrée d'air 48.

Selon une autre configuration visible sur la figure 9, le déflecteur 88 comprend une première paroi 92.1 qui comprend la face supérieure 90 et s'étend du bord avant 88.1 jusqu'à l'entrée d'air 48 ainsi qu'une deuxième paroi 92.2, sensiblement parallèle à la surface de référence Sr, qui s'étend du bord avant 88.1 jusqu'à l'entrée d'air 48.

Le dispositif d'admission d'air 46 comprend une liaison reliant le déflecteur 88 et l'entrée d'air 48. A titre d'exemple, le déflecteur 88 est relié à l'entrée d'air 48 par collage.

Le déflecteur 88 peut être métallique, en matière plastique ou en matériau composite.

Le déflecteur 88 empêche le flux d'air 56 de pénétrer dans le dispositif d'admission d'air 46 lorsque la vanne 66 est à l'état fermé, ce qui limite l'apparition de bruits aérodynamiques.

## Revendications

1. Aéronef comprenant au moins une paroi aérodynamique (50) le long de laquelle s'écoule un flux d'air (56) selon une direction d'écoulement en fonctionnement ainsi qu'au moins un dispositif d'admission d'air (46) comportant une entrée d'air (48) débouchant au niveau de la paroi aérodynamique (50), un conduit d'admission (52) l'entrée d'air (48) s'étendant entre une première extrémité (48.1) positionnée sur une surface de référence (Sr) sensiblement parallèle au flux d'air (56) et une deuxième extrémité (48.2) orientée vers le conduit d'admission (52), ce dernier comprenant une première extrémité (52.1) orientée vers l'entrée d'air (48) et espacée de la deuxième extrémité (48.2) de l'entrée d'air (48) ; le dispositif d'admission d'air (46) comprenant au moins une excroissance (70) en saillie par rapport à la surface de référence (Sr) et positionnée en amont de l'entrée d'air (48) selon la direction d'écoulement du flux d'air (56), à proximité de ou au même niveau que la première extrémité (48.1) de l'entrée d'air (48); l'entrée d'air (48) comprenant un bord amont (84.1),
un bord aval (84.2) décalé vers l'aval selon la direction d'écoulement du flux d'air (56) par rapport au bord amont (84.1) ainsi qu'un bord d'attaque (86) positionné en dessous du bord aval (84.2), **caractérisé en ce que** le conduit d'admission (52) est séparé de l'entrée d'air (48), et **en ce que** le dispositif d'admission d'air (46) comprend un joint annulaire (54) reliant l'entrée d'air (48) et le conduit d'admission (52) en les entourant et un déflecteur (88) présentant :
- un bord avant (88.1), sensiblement perpendiculaire à la direction d'écoulement du flux d'air (56) en fonctionnement, décalé vers l'amont par rapport au bord d'attaque (86) de l'entrée d'air (48) et plus écarté, vers le bas, de la surface de référence (Sr) que ledit bord d'attaque (86) de l'entrée d'air (48),
- une face supérieure (90) qui s'étend du bord avant (88.1) jusqu'à un bord arrière (88.2) positionné au niveau de l'entrée d'air (48), entre le bord d'attaque (86) de l'entrée d'air (48) et la surface de référence (Sr).

2. Aéronef selon la revendication 1, **caractérisé en ce que** l'excroissance (70) et l'entrée d'air (48) présentent un profil continu, sans points d'inflexion.

3. Aéronef selon la revendication 1 ou 2, **caractérisé en ce que** l'entrée d'air (48) est sensiblement symétrique par rapport à un plan longitudinal médian (PLM) et **en ce que** l'excroissance (70) est positionnée de manière symétrique par rapport au plan longitudinal médian (PLM).

4. Aéronef selon la revendication précédente, **caractérisé en ce que** l'excroissance (70) présente un sommet (74) ainsi qu'une hauteur (H) au niveau du sommet (74) supérieure ou égale à 10 mm.

5. Aéronef selon l'une des revendications 3 à 4, **caractérisé en ce que** l'excroissance (70) est linéaire et s'étend selon une trajectoire symétrique par rapport au plan longitudinal médian (PLM).

6. Aéronef selon l'une des revendications précédentes, **caractérisé en ce que** le dispositif d'admission d'air (46) comprend une jupe (76) solidaire du conduit d'admission (52), le prolongeant en direction de l'entrée d'air (48) et l'entourant, l'entrée d'air (48) et la jupe (76) étant configurées pour former une chicane.

7. Aéronef selon la revendication précédente, **caractérisé en ce que** l'entrée d'air (48) comprend un tronçon aval (60), sensiblement tubulaire et présentant une extrémité libre (60.1) orientée vers le conduit d'admission (52), ainsi qu'une première collerette (64) prévue à l'extérieur du tronçon aval (60) et reliée de manière étanche au joint annulaire (54) et **en ce que** la jupe (76) comprend une première partie (78) reliée au conduit d'admission (52) ainsi qu'une deuxième partie (80) tubulaire, solidaire de la première partie (78), positionnée autour du tronçon aval (60) de l'entrée d'air (48), la deuxième partie (80) présentant une extrémité libre (80.1) plus écartée du conduit d'admission (52) que l'extrémité libre (60.1) du tronçon aval (60) de l'entrée d'air (48).

8. Aéronef selon la revendication précédente, **caractérisé en ce que** la première partie (78) comprend une face intérieure (78.1) dans le prolongement du conduit d'admission (52).

9. Aéronef selon l'une des revendications précédentes, **caractérisé en ce que** le dispositif d'admission d'air (46) présente une vanne (66) configurée pour occuper des états ouvert et fermé ainsi qu'une profondeur donnée lorsque la vanne est à l'état fermé et **en ce que** le bord avant (88.1) du déflecteur (88) est séparé de la surface de référence (Sr) d'une distance (Di) comprise entre 15 et 25% de la profondeur du dispositif d'admission d'air (46).

10. Aéronef selon l'une des revendications précédentes, **caractérisé en ce que** l'entrée d'air (48) présente une longueur donnée dans un plan de mesure (Pm) sensiblement parallèle à la surface de référence (Sr) et contenant le bord avant (88.1) du déflecteur (88) et **en ce que**, dans le plan de mesure (Pm), le bord avant (88.1) du déflecteur (88) est séparé de l'entrée d'air (48) d'une distance (L) comprise entre 15 et 25% de la longueur donnée de l'entrée d'air (48).

## Patentansprüche

1. Luftfahrzeug, welches mindestens eine aerodynamische Wand (50) umfasst, entlang der im Betrieb ein Luftstrom (56) in einer Strömungsrichtung fließt, sowie mindestens eine Lufteinlassvorrichtung (46), die einen an der aerodynamischen Wand (50) mündenden Lufteinlass (48) und einen Einlasskanal (52) aufweist, wobei sich der Lufteinlass (48) zwischen einem ersten Ende (48.1), das an einer zum Luftstrom (56) im Wesentlichen parallelen Referenzfläche (Sr) positioniert ist, und einem zweiten Ende (48.2), das dem Einlasskanal (52) zugewandt ist, erstreckt, wobei dieser Letztere ein erstes Ende (52.1) umfasst, das dem Lufteinlass (48) zugewandt und vom zweiten Ende (48.2) des Lufteinlasses (48) beabstandet ist; wobei die Lufteinlassvorrichtung (46) mindestens eine Ausstülpung (70) umfasst, die in Bezug auf die Referenzfläche (Sr) vorsteht und in der Strömungsrichtung des Luftstroms (56) stromaufwärts des Lufteinlasses (48) positioniert ist, in der Nähe des ersten Endes (48.1) des Lufteinlasses (48) oder auf gleicher Höhe wie dieses; wobei der Lufteinlass (48) einen stromaufwärtigen Rand (84.1), einen stromabwärtigen Rand (84.2), der in der Strömungsrichtung des Luftstroms (56) in Bezug auf den stromaufwärtigen Rand (84.1) stromabwärts versetzt ist, sowie eine Anströmkante (86), die unterhalb des stromabwärtigen Randes (84.2) positioniert ist, umfasst, **dadurch gekennzeichnet, dass** der Einlasskanal (52) von dem Lufteinlass (48) getrennt ist, und dadurch, dass die Lufteinlassvorrichtung (46) eine Ringdichtung (54), die den Lufteinlass (48) und den Einlasskanal (52) verbindet, indem sie sie umgibt, und einen Deflektor (88) umfasst, welcher aufweist:
- einen vorderen Rand (88.1), der im Betrieb im Wesentlichen senkrecht zur Strömungsrichtung des Luftstroms (56) ist, in Bezug auf die Anströmkante (86) des Lufteinlasses (48) stromaufwärts versetzt ist und weiter entfernt, nach unten, von der Referenzfläche (Sr) ist, als die Anströmkante (86) des Lufteinlasses (48),
- eine obere Seite (90), die sich von dem vorderen Rand (88.1) bis zu einem hinteren Rand (88.2) erstreckt, der am Lufteinlass (48) zwischen der Anströmkante (86) des Lufteinlasses (48) und der Referenzfläche (Sr) positioniert ist.

2. Luftfahrzeug nach Anspruch 1, **dadurch gekennzeichnet, dass** die Ausstülpung (70) und der Lufteinlass (48) ein durchgehendes Profil ohne Wendepunkte aufweisen.

3. Luftfahrzeug nach Anspruch 1 oder 2, **dadurch gekennzeichnet, dass** der Lufteinlass (48) im Wesentlichen symmetrisch in Bezug auf eine Mittellängsebene (PLM) ist, und dadurch, dass die Ausstülpung (70) symmetrisch bezüglich der Mittellängsebene (PLM) positioniert ist.

4. Luftfahrzeug nach dem vorhergehenden Anspruch, **dadurch gekennzeichnet, dass** die Ausstülpung (70) einen Scheitelpunkt (74) sowie eine Höhe (H) am Scheitelpunkt (74), die größer oder gleich 10 mm ist, aufweist.

5. Luftfahrzeug nach einem der Ansprüche 3 bis 4, **dadurch gekennzeichnet, dass** die Ausstülpung (70) geradlinig ist und sich entlang einer Trajektorie erstreckt, die symmetrisch bezüglich der Mittellängsebene (PLM) ist.

6. Luftfahrzeug nach einem der vorhergehenden Ansprüche, **dadurch gekennzeichnet, dass** die Lufteinlassvorrichtung (46) eine Schürze (76) umfasst, die mit dem Einlasskanal (52) fest verbunden ist, ihn in Richtung des Lufteinlasses (48) verlängert und ihn umgibt, wobei der Lufteinlass (48) und die Schürze (76) dafür ausgelegt sind, eine Ablenkvorrichtung zu bilden.

7. Luftfahrzeug nach dem vorhergehenden Anspruch, **dadurch gekennzeichnet, dass** der Lufteinlass (48) ein stromabwärtiges Teilstück (60) umfasst, das im Wesentlichen rohrförmig ist und ein dem Einlasskanal (52) zugewandtes freies Ende (60.1) aufweist, sowie einen ersten Kragen (64), der auf der Außenseite des stromabwärtigen Teilstücks (60) vorgesehen ist und auf dichte Weise mit der Ringdichtung (54) verbunden ist, und dadurch, dass die Schürze (76) einen ersten Teil (78) umfasst, der mit dem Einlasskanal (52) verbunden ist, sowie einen rohrförmigen zweiten Teil (80), der mit dem ersten Teil (78) fest verbunden ist und um das stromabwärtige Teilstück (60) des Lufteinlasses (48) herum positioniert ist, wobei der zweite Teil (80) ein freies Ende (80.1) aufweist, das von dem Einlasskanal (52) weiter als das freie Ende (60.1) des stromabwärtiges Teilstücks (60) des Lufteinlasses (48) entfernt ist.

8. Luftfahrzeug nach dem vorhergehenden Anspruch, **dadurch gekennzeichnet, dass** der erste Teil (78) eine Innenseite (78.1) in der Verlängerung des Einlasskanals (52) umfasst.

9. Luftfahrzeug nach einem der vorhergehenden Ansprüche, **dadurch gekennzeichnet, dass** die Lufteinlassvorrichtung (46) ein Ventil (66) aufweist, das dafür ausgelegt ist, einen geöffneten und einen geschlossenen Zustand sowie eine gegebene Tiefe, wenn sich das Ventil im geschlossenen Zustand befindet, einzunehmen, und dadurch, dass der vordere Rand (88.1) des Deflektors (88) von der Referenzfläche (Sr) durch einen Abstand (Di) getrennt ist, der zwischen 15 und 25 % der Tiefe der Lufteinlassvorrichtung (46) beträgt.

10. Luftfahrzeug nach einem der vorhergehenden Ansprüche, **dadurch gekennzeichnet, dass** der Lufteinlass (48) eine gegebene Länge in einer Messebene (Pm) aufweist, die im Wesentlichen parallel zur Referenzfläche (Sr) ist und den vorderen Rand (88.1) des Deflektors (88) enthält, und dadurch, dass in der Messebene (Pm) der vordere Rand (88.1) des Deflektors (88) vom Lufteinlass (48) durch einen Abstand (L) getrennt ist, der zwischen 15 und 25 % der gegebenen Länge des Lufteinlasses (48) beträgt.

## Claims

1. Aircraft comprising at least one aerodynamic wall (50) along which an airflow (56) flows in a direction of flow during operation, as well as at least one air intake device (46) comprising an air inlet (48) opening onto the aerodynamic wall (50), an intake duct (52), the air inlet (48) extending between a first end (48.1) positioned on a reference surface (Sr) substantially parallel to the airflow (56) and a second end (48.2) oriented towards the intake duct (52), the latter having a first end (52.1) oriented towards the air inlet (48) and spaced away from the second end (48.2) of the air inlet (48); the air intake device (46) comprising at least one protrusion (70) projecting from the reference surface (Sr) and positioned upstream of the air inlet (48) in the direction of flow of the airflow (56), in the vicinity of or at the first end (48.1) of the air inlet (48); the air inlet (48) comprising an upstream edge (84.1), a downstream edge (84.2) offset in the downstream according to the direction in which the airflow (56) flows with respect to the upstream edge (84.1) as well as a leading edge (86) positioned below the downstream edge (84.2), **characterized in that** the intake duct (52) is separated from the air inlet (48), and **in that** the air intake device (46) comprises a ring joint (54) connecting the air inlet (48) and the intake duct (52) while surrounding these and a deflector (88) having:
- a front edge (88.1) substantially perpendicular to the direction of flow of the airflow (56) in operation and offset in the upstream direction with respect to the leading edge (86) of the air inlet (48) and separated, downward, from the reference surface (Sr) by a greater distance than said leading edge (86) of the air inlet (48),
- an upper face (90) which extends from the front edge (88.1) as far as a rear edge (88.2) positioned at the air inlet (48), between the leading edge (86) of the air inlet (48) and the reference surface (Sr).

2. Aircraft according to Claim 1, **characterized in that** the protrusion (70) and the air inlet (48) exhibit a continuous profile with no points of inflection.

3. Aircraft according to Claim 1 or 2, **characterized in that** the air inlet (48) is substantially symmetrical with respect to a longitudinal midplane (PLM), and **in that** the protrusion (70) is positioned symmetrically about the longitudinal midplane (PLM).

4. Aircraft according to the preceding claim, **characterized in that** the protrusion (70) has a summit (74) and a height (H) at the summit (74) that is greater than or equal to 10 mm.

5. Aircraft according to one of Claims 3 to 4, **characterized in that** the protrusion (70) is linear and extends along a path that is symmetrical with respect to the longitudinal midplane (PLM).

6. Aircraft according to one of the preceding claims, **characterized in that** the air intake device (46) comprises a skirt (76) secured to the intake duct (52), extending same towards the air inlet (48) and surrounding same, the air inlet (48) and the skirt (76) being configured in such a way as to form a baffle.

7. Aircraft according to the preceding claim, **characterized in that** the air inlet (48) comprises a downstream portion (60) that is substantially tubular and has a free end (60.1) oriented towards the intake duct (52), as well as a first flange (64) provided on the outside of the downstream portion (60) and connected in a fluidtight manner to the ring joint (54), and **in that** the skirt (76) comprises a first part (78) connected to the intake duct (52) and a tubular second part (80), secured to the first part (78) and positioned around the downstream portion (60) of the air inlet (48), the second part (80) having a free end (80.1) which is separated from the intake duct (52) by a greater distance than the free end (60.1) of the downstream portion (60) of the air inlet (48).

8. Aircraft according to the preceding claim, **characterized in that** the first part (78) comprises an interior face (78.1) in the continuation of the intake duct (52).

9. Aircraft according to one of the preceding claims, **characterized in that** the air intake device (46) has a valve (66) configured to occupy open and closed states, and a given depth when the valve is in the closed state, and **in that** the front edge (88.1) of the deflector (88) is separated from the reference surface (Sr) by a distance (Di) comprised between 15 and 25% of the depth of the air intake device (46).

10. Aircraft according to one of the preceding claims, **characterized in that** the air inlet (48) has a given length in a measurement plane (Pm) substantially parallel to the reference surface (Sr) and containing the front edge (88.1) of the deflector (88), and **in that**, in the measurement plane (Pm), the front edge (88.1) of the deflector (88) is separated from the air inlet (48) by a distance (L) comprised between 15 and 25% of the given length of the air inlet (48).
